Europäisches Patentamt

(19) European Patent Office

Office européen des brevets

(11) Publication number: **0 104 623**
**B1**

(12) **EUROPEAN PATENT SPECIFICATION**

(45) Date of publication of patent specification: **16.12.87**

(21) Application number: **83109490.9**

(22) Date of filing: **23.09.83**

(51) Int. Cl.⁴: **B 23 K 35/30,** B 23 K 35/32, C 22 C 5/00

(54) **Ductile brazing alloy containing reactive metals and precious metals.**

(30) Priority: **24.09.82 US 422625**

(43) Date of publication of application:
**04.04.84 Bulletin 84/14**

(45) Publication of the grant of the patent:
**16.12.87 Bulletin 87/51**

(84) Designated Contracting States:
**AT DE FR GB NL SE**

(56) References cited:
**EP-A-0 005 312**
**DE-B-1 030 756**
**DE-C- 732 318**
**FR-A-1 249 498**
**GB-A- 976 660**
**GB-A-1 109 108**

(73) Proprietor: **GTE Products Corporation**
**100 West 10th Street**
**Wilmington, DE 19801 (US)**

(72) Inventor: **Mizuhara, Howard**
**135 Stonehedge Road**
**Hillsobrough, CA 95010 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

## Description

This invention relates to brazing alloys.

Brazing alloys containing relatively high levels of titanium are known. Generally, the titanium content is above about 7% by weight. These alloys are not ductile and cannot be rolled to a foil in a satisfactory manner and upon brazing a brittle dispersed phase is present.

From GB—A—976600 brazing alloys are known consisting of 57% to 58% palladium, 38% to 39% nickel and 3% to 5% titanium. In GB—A—1 109 108 brazing alloys are disclosed consisting of 55 to 58 volume percent palladium, 38 to 41 volume percent nickel and 4.5 zirconium. Furthermore, DE—C—732318 discloses a brazing alloy containing 25% to 70% by weight gold, 2% to 20% by weight palladium, 3% to 25% cadmium, up to 20% silver, balanced (5% to 30% by weight) copper.

Brazing alloys according to the invention are defined in independent claims 1 and 6. Preferred embodiments of the inventive brazing alloys are defined in the subclaims. The inventive brazing alloys are ductile and after brazing are relatively free of hard dispersed phases.

For a better understanding of the present invention, together with other and further objects, advantages and capabilities thereof, reference is made to the following disclosure and appended claims in connection with the above description of some of the aspects of the invention.

The amount of the reactive metal in the alloys of this invention does not exceed 5% by weight in order to achieve a ductile material which upon brazing is free of dispersed phases.

The amount of reactive metal in the alloys of this invention is from 0.25 by weight to 5% by weight, with from 1% by weight to 3% by weight being preferred. By reactive metal, within the context of this disclosure, is meant titanium, zirconium, vanadium and mixtures thereof. While titanium generally is the preferred reactive metal, alloy compositions of Ti-Zr and Ti-V are equally effective.

The weight percent of the precious metal, which is selected from gold, palladium and mixtures thereof, can vary from 25% by weight to 85% by weight. The preferred level is generally from 28% by weight to 81% by weight.

The alloys of this invention further comprise copper or chromium combined with copper or nickel. The weight percent of the third metal which is copper can vary from 15% by weight to 70% by weight. Copper can partially be replaced by nickel in amounts of from 17% by weight to 40% by weight. Copper is preferably present in amounts of from 50% by weight to 65% by weight.

Chromium is an optional metal which can be added to the alloys of this invention to improve corrosion resistance. When added it is added in amount of from 2% by weight to 15% by weight and preferably from about 5% to about 10% by weight.

Various alloys are prepared by skull melting using a tungsten electrode and an argon atmosphere. The alloys are ductile and are rolled, to foils using an intermediate vacuum anneal. The thickness of the foil is of from about 2 to 6 mils.

The alloys composition and their flow temperatures are given in Table 1.

TABLE 1

| Alloy | Ti | Au | Pd | Cu | Ni | Cr | Brazing Temperature °C |
|-------|----|----|----|----|----|----|------------------------|
| 1 | 2 | 35 |    | 63 |    |    | 1050 |
| 2 | 2 | 75 |    | 17 |    | 6  | 1030 |
| 3 | 2 | 35 | 60 | 3  |    |    | 1070 |
| 4 | 3 | 52 |    | 35 |    | 10 | 1290 |

The alloys are suitable for a variety of brazing applications. For example alloys 1 and 3 above are useful for brazing ceramics to ferrous base alloys such as brazing alumina to an iron-cobalt alloy known as Kovar. Alloys 2 and 4 are useful for brazing stainless steels such as 304 stainless steel.

## Claims

1. A brazing alloy consisting of 0.25% to 5% of a reactive metal selected from the group consisting of titanium, vanadium, zirconium and mixtures thereof; 25% to 85% by weight of a precious metal selected from the group consisting of gold, palladium and mixtures thereof; 15% to 70% by weight of copper as a third metal; optionally 2% to 15% by weight of chromium as a fourth metal and incidental impurities.

2. An alloy according to claim 1 wherein said precious metal is present in an amount of from 28% to 81% by weight.

3. An alloy according to claim 1 wherein copper is present in an amount of from 50% to 65% by weight.

4. An alloy according to claim 1 wherein copper is partially replaced by nickel in amounts of from 17% to 40% by weight.

5. An alloy according to claim 1 wherein chromium is present in amounts of from 5% to 10% by weight.

6. A brazing alloy consisting of from 0.25% to 5% by weight of a reactive metal selected from the group consisting of titanium, vanadium, zirconium and mixtures thereof; from 25% to 85% by weight of a precious metal selected from gold, palladium and mixtures thereof; from 15% to 70% by weight of a third metal selected from copper, nickel and mixtures thereof; from 2% to 15% by weight of chromium as a fourth metal and incidental impurities.

7. An alloy according to claim 6 wherein chromium is present in amounts of from 5% to 10% by weight.

8. An alloy according to claim 6 wherein said precious metal is present in an amount of from 28% to 81% by weight.

## Patentansprüche

1. Hartlötlegierung mit 0,25 bis 5% eines reaktionsfähigen Metalls aus der Gruppe, welche Titan, Vanadium, Zirconium und Mischungen dieser Metalle umfaßt; 25 bis 85 Gew.-% eines Edelmetalls aus der Gruppe, welche Gold, Palladium und Mischungen von diesen umfaßt; 15 bis 70 Gew.-% Kupfer als drittes Metall; wahlweise 2 bis 15 Gew.-% Chrom als viertes Metall und zufällige Verunreinigungen.

2. Legierung nach Anspruch 1, wobei das Edelmetall in einer Menge zwischen 28 und 81 Gew.-% vorliegt.

3. Legierung nach Anspruch 1, wobei Kupfer in einer Menge zwischen 50 und 65 Gew.-% vorliegt.

4. Legierung nach Anspruch 1, wobei Kupfer teilweise durch Nickel in Menge von 17 bis 40 Gew.-% ersetzt ist.

5. Legierung nach Anspruch 1, wobei Chrom in Mengen von 5 bis 10 Gew.-% vorliegt.

6. Hartlötlegierung mit zwischen 0,25 und 5 Gew.-% eines reaktionsfähigen Metalls, welches aus der Gruppe ausgewählt ist, die Titan, Vanadium, Zirconium oder Mischungen aus diesen umfaßt; zwischen 25 und 85 Gew.-% eines Edelmetalls, welches aus Gold, Palladium und Mischungen aus diesen ausgewählt ist; zwischen 15 bis 70 Gew.-% eines dritten Metalls, welches aus Kupfer, Nickel und Mischungen aus diesen ausgewählt ist; zwischen 2 bis 15 Gew.-% Chrom als viertes Metall und zufälligen Verunreinigungen.

7. Legierung nach Anspruch 6, wobei Chrom in Mengen zwischen 5 bis 10 Gew.-% vorliegt.

8. Legierung nach Anspruch 6, wobei das Edelmetall in Mengen zwischen 28 und 81 Gew.-% vorliegt.

## Revendications

1. Alliage de brasage comprenant entre 0,25 et 5% d'un métal réactif choisi dans le groupe comprenant le titane, le vanadium, le zirconium et les mélanges de ceux-ci, entre 25 et 85% en poids d'un métal précieux choisi dans le groupe comprenant l'or, le palladium et les mélanges de ceux-ci, entre 15 et 70% en poids de cuivre en tant que troisième métal, éventuellement entre 2 et 15% en poids de chrome en tant que quatrième métal, et des impuretés fortuites.

2. Alliage selon la revendication 1 caractérisé en ce qu'il comprend entre 28 et 81% en poids du dit métal précieux.

3. Alliage selon la revendication 1 caractérisé en ce qu'il comprend entre 50 et 65% en poids de cuivre.

4. Alliage selon la revendication 1 caractérisé en ce que le cuivre est partiellement remplacé par du nickel en quantité comprise entre 17 et 40% en poids.

5. Alliage selon la revendication 1 caractérisé en ce qu'il comprend entre 5 et 10% en poids de chrome.

6. Alliage de brasage comprenant entre 0,25 et 5% en poids d'un métal réactif choisi dans le groupe comprenant le titane, le vanadium, le zirconium et les mélanges de ceux-ci, entre 25 et 85% en poids d'un métal précieux choisi dans le groupe comprenant l'or, le palladium et les mélanges de ceux-ci, entre 15 et 70% en poids d'un troisième métal choisi dans le groupe comprenant le cuivre, le nickel et les mélanges de ceux-ci, entre 2 et 15% en poids de chrome en tant que quatrième métal, et des impuretés fortuites.

7. Alliage selon la revendication 6 caractérisé en ce qu'il comprend entre 5 et 10% en poids de chrome.

8. Alliage selon la revendication 6 caractérisé en ce qu'il comprend entre 28 et 81% en poids du dit métal précieux.